# EUROPÄISCHE PATENTSCHRIFT

(11) **EP 1 737 677 B1**
(45) Veröffentlichungstag und Bekanntmachung des Hinweises auf die Patenterteilung: **06.01.2016**
(21) Anmeldenummer: 05742370.9
(22) Anmeldetag: 13.04.2005
(51) Int. Cl.: G02B 5/30, B42D 25/29, B42D 25/355

(54) **FOLIE MIT POLYMERSCHICHT**
FILM COMPRISING A POLYMER LAYER
FEUILLE COMPRENANT UNE COUCHE POLYMERE

(30) Priorität: 17.04.2004 DE 102004018702
(43) Veröffentlichungstag der Anmeldung: 03.01.2007
(73) Patentinhaber: Leonhard Kurz Stiftung & Co. KG, 90763 Fürth (DE)
(72) Erfinder: KATSCHOREK, Haymo, 90578 Obermichelbach (DE); SCHILLING, Andreas, CH-6332 Hagendorn (CH); SEITZ, Mathias, 91054 Buckenhof (DE)
(74) Vertreter: Zinsinger, Norbert
(86) Internationale Anmeldenummer: PCT/DE2005/000667
(87) Internationale Veröffentlichungsnummer: WO 2005/101101

(56) Entgegenhaltungen:
- EP-A- 1 227 347
- WO-A-03/054810
- DE-A1- 10 023 004
- US-A1- 2002 081 400
- US-A1- 2003 193 184
- US-B1- 6 496 287

## Beschreibung

Die Erfindung betrifft eine Folie, insbesondere eine Prägefolie, Laminierfolie oder Stickerfolie, die zumindest eine optisch anisotrope Schicht aus einem zumindest partiell orientiertem Flüssigkristall-Material aufweist.

In EP 1 227 347 wird beschrieben, Flüssigkristall-Polymere (Liquid-Crystal-Polymers/ = LCP) an einer Photopolymerschicht auszurichten und auf diese Weise ein mittels eines Polarisators erkennbares Sicherheitsmerkmal zu generieren.

Auf einem Substrat wird mittels eines Tintenstrahldruckers eine erste Orientierungsschicht ausgedruckt, die aus einem Photopolymer besteht, welches sich durch Bestrahlung mit polarisiertem Licht in eine bestimmte Orientierungsrichtung ausrichten läßt. Diese Schicht wird nun mit polarisiertem Licht bestrahlt. Anschließend wird mittels eines Tintenstrahldruckers eine Schicht aus einem Flüssigkristall-Material auf die Orientierungsschicht aufgebracht und Bedingungen geschaffen, unter denen sich das Flüssigkristall-Material ausrichtet. Anschließend wird die Flüssigkristallschicht mittels UV-Strahlung ausgehärtet. In dem Bereich, in dem die Orientierungsschicht aus einem Photopolymer und die Flüssigkristall-Schicht aufgedruckt ist, wird so eine anisotrope Polymerschicht aus einem orientiertem Flüssigkristall-Material geschaffen, wodurch das in diesem Bereich einfallende Licht linear polarisiert wird.

Weiter beschreibt EP 1 227 347, daß zwei Orientierungsschichten übereinander auf ein Substrat aufgebracht werden können. Die beiden Schichten werden hierbei jeweils mit unterschiedlich polarisiertem Licht bestrahlt und dann fixiert, so daß sich Orientierungsschichten mit unterschiedlicher Orientierung ergeben, die übereinander angeordnet sind. Durch diese Mehrfachbeschichtung in Kombination mit einer entsprechenden musterförmigen Ausgestaltung der einzelnen übereinander angeordneten Photopolymerschichten sind so Bereiche mit unterschiedlicher Orientierung und damit Bereiche erzielbar in denen das Licht in unterschiedlichen Richtungen linear polarisiert wird.

Weiter wird in WO 01/55960 beschrieben, in einem Sicherheitselement eine Schicht aus einem Flüssigkristall-Material vorzusehen, welches bereichsweise in verschiedenen Orientierungsrichtungen ausgerichtet ist. Auch hier erfolgt die Orientierung der Flüssigkristall-Moleküle mittels einer Photopolymerschicht, die mit linear polarisiertem Licht belichtet wird und im Folgenden der Orientierung der Flüssigkristall-Moleküle vor deren Vernetzung.dient. Bereiche mit verschiedener Ausrichtung der Flüssigkristall-Moleküle sind hierbei so angeordnet, daß in diesen Bereichen ein Objekt kodiert wird, welches mittels eines speziellen zugeordneten Polarisators dekodierter ist, der ebenfalls über eine entsprechende, auf das Sicherheitselement abgestimmte, bereichsweise unterschiedlich orientierte Flüssigkristall-Schicht verfügt. Auf diese Weise ist es möglich, zwei unterschiedliche Bildinformationen in ein optisches Sicherheitselement einzubringen: Bei Betrachtung des Sicherheitselements durch einen "normalen" Polarisator zeigt sich ein erstes Latentbild. Bei Betrachtung des Sicherheitselements durch den oben beschriebenen, auf das Sicherheitselement abgestimmten Polarisator mit einer bereichsweise unterschiedlich orientierten Flüssigkristallschicht - im folgenden "Schlüssel" genannt - wird ein zweites Bild dekodiert und damit sichtbar gemacht. Nachteilig bei diesem Verfahren ist, daß Sicherheitselement und "Schlüssel" (Analysatortool) exakt aufeinander abgestimmt sein müssen und die zusätzliche Sicherheitsinformation nur bei Vorliegen eines entsprechenden "Schlüssels" abgerufen werden kann. Die Erstellung eines passenden "Schlüssels" ist damit mit ähnlichem hohem Aufwand wie die Erstellung des eigentlichen Sicherheitselementes verbunden.

Der Erfindung liegt nun die Aufgabe zugrunde, ein vereinfachtes und kostengünstigeres Verfahren für ein, auf orientierten Flüssigkristall-Schichten basierendes optisches Sicherheitselement anzugeben, das zwei unterschiedliche latente Bildinformationen in sich vereint, die mit kommerziell verfügbaren, kostengünstigen Analysatortools selektiv ausgelesen werden können.

Diese Aufgabe wird durch eine Folie, insbesondere eine Prägefolie, Laminierfolie oder Stickerfolie gelöst, die zumindest eine anisotrope Schicht aus einem zumindest partiell orientiertem Polymermaterial, vorzugsweise ein Flüssigkristall-Polymer, aufweist. Die anisotrope Schicht oder die anisotropen Schichten aus dem zumindest partiell orientierten Polymermaterial bilden dabei Bereiche, die auf unterschiedliche Polarisationszustände von einfallendem Licht ansprechen und in Abhängigkeit davon unterschiedliche Bildinformationen enthalten.

Hierbei kann das erste latente Sicherheitsmerkmal bei Betrachtung durch einen ersten Polarisator, beispielsweise einen Linear-Polarisator, und das zweite Sicherheitsmerkmal bei Betrachtung durch einen zweiten, auf einen anderen Polarisationszustand ansprechenden Polarisator, z. B. einen Zirkular-Polarisator, sichtbar gemacht werden.

Durch die Erfindung ist es somit möglich, in einem Sicherheitsmerkmal und in einem Arbeitsschritt überlagert zwei oder mehrere latente Bildinformationen einzubringen, die mittels einfacher Hilfsmittel, nämlich einem auf linear polarisiertes Licht ansprechenden Polarisator und einem auf zirkular polarisiertes Licht ansprechenden Polarisator, selektiv visualisiert werden können. Die dafür notwendigen Polarisatoren als Analysatortools sind kommerziell verfügbar und können ohne weitere Modifizierung verwendet werden. Die mittels der Erfindung erstellten Sicherheitsmerkmale weisen auf Grund der Kombination von unterschiedlich auf verschiedene Polarisationszustände ansprechenden Bereichen eine hohe Komplexität auf und sind nur schwer nachzuahmen. Nachahmungsversuche des einen Sicherheitselements beeinflussen jeweils auch das andere Sicherheitselement, so daß eine Verfälschung oder eine Nachahmung der von der erfindungsgemäßen Folie bereitgestellten Sicherheitsmerkmale nur sehr schwer möglich ist. Die Folie bietet somit ein hohes Maß an Sicherheit verbunden mit dem bereits genannten Vorteil, daß einfache, kostengünstige und weit verbreitete Hilfsmittel zur Decodierung der versteckten Sicherheitsmerkmale eingesetzt werden können.

Vorteilhafte Ausgestaltungen der Erfindung sind in den Unteransprüchen bezeichnet.

Ein besonders hohes Maß an Fälschungssicherheit wird erzielt, wenn eine einzelne anisotrope Polymerschicht sowohl erste Bereiche mit linear polarisierenden oder die Polarisationsrichtung drehenden Eigenschaften als auch zweite Bereiche mit zirkular polarisierenden Eigenschaften aufweist. Hierbei sind bevorzugt erste Bereiche und zweite Bereich der anisotropen Polymerschicht unmittelbar nebeneinander angeordnet. Auf diese Weise wird eine Manipulation oder eine Verfälschung eines Sicherheitsmerkmals extrem erschwert, da jeder Versuch, ein Sicherheitsmerkmal zu ändern, gleichzeitig eine Veränderung des anderen Sicherheitsmerkmals bedingt. Weiter ist die Nachahmung einer derartigen anisotropen Polymerschicht mit einem sehr hohen Aufwand verbunden.

Gemäß eines bevorzugten Ausführungsbeispiels der Erfindung weist die Folie zumindest eine Replikationsschicht auf, auf der die anisotrope Polymerschicht aus einem Flüssigkristall-Material aufgebracht wird. Die diffraktive Struktur dient dabei zur Orientierung des anisotropen Polymermaterials. Mittels einer derartigen Technologie ist es zum einen möglich, die anisotrope Polymerschicht aus einem Flüssigkristall-Material mittels eines kostengünstigen Fertigungsprozesses besonders präzise zu orientieren. Weiter wird hierdurch eine besonders effektive Möglichkeit bereitgestellt, die bereits oben beschriebene anisotrope Polymerschicht zu fertigen, die sowohl erste Bereiche mit linear polarisierenden oder die Polarisationsrichtung drehenden Eigenschaften als auch zweite Bereiche mit zirkular polarisierenden Eigenschaften besitzt:
Die diffraktive Struktur wird so gewählt, daß sich die Strukturparameter der diffraktiven Struktur, insbesondere die mittlere Strukturtiefe, in den Bereichen, die Bereiche mit linear polarisierenden oder die Polarisationsrichtung drehenden Eigenschaften bzw. Bereiche mit zirkular polarisierenden Eigenschaften der angrenzenden anisotropen Polymerschicht zugeordnet sind, unterscheiden.

Durch die Wahl der Strukturparameter der diffraktiven Struktur lässt sich nicht nur die Orientierung der auf die Replikationsschicht aufgebrachten anisotropen Polymerschicht aus einem Flüssigkristall-Material einstellen, sondern auch bestimmen, ob die anisotrope Polymerschicht linear polarisierende oder die Polarisationsrichtung drehende Eigenschaften, oder zirkular polarisierende Eigenschaften besitzt. Die Orientierung der anisotropen Polymerschicht wird hierbei im wesentlichen durch die Azimutorientierung der diffraktiven Struktur bestimmt. Die Strukturform, Spatialfrequenz und vor allem die mittlere Strukturtiefe bestimmen die Polarisationseigenschaften der darüber liegenden anisotropen Polymerschicht aus einem Flüssigkristall-Material. Durch Wahl dieser Parameter läßt sich einstellen, ob die darüberliegende anisotrope Polymerschicht aus einem Flüssigkristall-Material die linear polarisierende oder die Polarisationsrichtung drehenden Eigenschaften einerseits oder zirkular polarisierende Eigenschaften andererseits besitzt. Durch Wahl einer geeigneten diffraktiven Struktur läßt sich so für jeden Bereich der darüber liegenden anisotrope Polymerschicht präzise einstellen, in welche Richtung die Flüssigkristalle orientiert sind und welche lokalen Polarisationseigenschaften die Flüssigkeitskristalle besitzen, d.h. ob sie linear polarisierende oder die Polarisationsrichtung drehende Eigenschaften oder zirkular polarisierende Eigenschaften besitzt.

Ein derartiger Effekt läßt sich nur schwer durch die Orientierung von Flüssigkristall-Material an einer mittels Bestrahlung mit polarisiertem Licht orientierten Photopolymerschicht oder durch Orientierung von Flüssigkristall-Material an mikroverkratzten Orientierungsschicht erzielen, da eine gezielte Steuerung der Schichtdicke der anisotropen Polymerschicht auf der Orientierungsschicht nur durch ein entsprechendes Applikationsverfahren möglich ist. Der dafür notwendige apparative Aufwand gewährleistet ein sehr hohes Maß an Fälschungssicherheit.

Die diffraktive Struktur wird bevorzugt aus einer Überlagerung einer ersten und einer zweiten Struktur gebildet. Die erste Struktur dient hierbei der Orientierung des Flüssigkristall-Materials. Die zweite Struktur dient der Einstellung der linear polarisierenden, oder die Polarisationsrichtung drehenden Eigenschaften, oder der zirkular polarisierenden Eigenschaften der an die Replikationsschicht angrenzenden anisotropen Polymerschicht. Bei dieser Vorgehensweise wird auf eine einfache, kostengünstige und sehr präzise Art und Weise die Herstellung der oben beschriebenen anisotropen Polymerschicht ermöglicht. Als erste Struktur wird beispielsweise ein Liniengitter mit einer Spatialfrequenz von 1500 Linien/mm bis 3500 Linien/mm und einer Tiefe von 50 nm bis 500 nm verwendet. Als zweite Struktur wird beispielsweise eine isotrope Mattstruktur mit einer Strukturtiefe von 200 nm bis 800 nm und einer lateralen Korrelationslänge von einigen Mikrometern verwendet.

Bevorzugt wird ein Kombinationsgitter verwendet, das aus einer isotropen Mattstruktur und einem Lineargitter hoher Linienzahl besteht. Als Lineargitter kann hierbei beispielsweise ein Sinusgitter verwendet werden. Die Mattstruktur hat hierbei bevorzugt eine Tiefe von 50 nm bis 2000 nm, sowie eine Korrelationslänge im µm-Bereich.

Bei einem solchen Kombinationsgitter aus einer isotropen Mattstruktur und einem Lineargitter hoher Linienzahl übernimmt hierbei das relativ flache, hochfrequente Gitter, z.B. Sinusgitter (Tiefe des Gitters typ. z.B. 140 nm), die Funktion, die Flüssigkristallmoleküle räumlich zu orientieren. Hierbei ist eine relativ hohe Linienzahl des Sinusgitters (z.B. 2860 l/mm) nicht zwingend nötig, jedoch sehr vorteilhaft. Die im Vergleich hierzu relativ tiefe isotrope Mattstruktur (z.B. typ. 600 nm) des Kombinationsgitters bewirkt hingegen eine relativ grosse lokale Schichtdicke der Flüssigkristallschicht, da die mikroskopischen Strukturen durch das Flüssigkristallmaterial aufgefüllt werden. Dieser Schichtdickeneffekt an sich ist isotrop, d.h. besitzt keine ausgezeichnete räumliche Orientierung. Die räumliche Vorzugsrichtung wird ausschliesslich durch das hochfrequente, flache Lineargitter bewirkt. Ein Bereich, welcher nur das relativ flache, hochfrequente Sinusgitter (z.B. typ. 140 nm) enthält vermag somit das einfallende Licht ausschliesslich linear zu polarisieren, wohingegen das Kombinationsgitter aus flachem Sinusgitter und tiefer Mattstruktur einen kombinierten Ausrichtungs- und Schichtdickeneffekt bewirkt, welcher im Resultat zu der zirkularpolarisierenden, optischen Funktion führt.

Es konnte ermittelt werden, daß bei der Verwendung derartiger Strukturen eine besonders präzise Einstellung der Azimutorientierung und der Polarisationseigenschaften der an die Replikationsschicht angrenzenden anisotrope Polymerschicht erzielbar sind.

Alternativ ist es auch möglich, daß die Folie zwei oder mehr anisotrope Polymerschichten aus einem zumindest partiell orientiertem Flüssigkristall-Material aufweist, wobei eine der anisotropen Polymerschichten Bereiche mit linear polarisierenden oder die Polarisationsrichtung drehenden Eigenschaften und eine zweite anisotrope Polymerschicht Bereiche mit zirkular polarisierenden Eigenschaften aufweist. Besondere Anforderungen ergeben sich dadurch, daß die beiden Schichten mit sehr hoher Passergenauigkeit aufeinander aufzubringen sind, um die Vorteile der oben beschriebenen anisotropen Polymerschicht mit ersten und zweiten Bereichen zu erzielen.

Gemäß eines bevorzugten Ausführungsbeispiels der Erfindung weist die anisotrope Polymerschicht eine Vielzahl von Bildbereichen auf, die eine Ausdehnung kleiner als 40 µm besitzen (d. h. deutlich kleiner als das Auflösungsvermögen des menschlichen Auges), wobei in jedem der Bildbereiche zumindest einer der ersten Bereiche mit linear polarisierenden oder Polarisationsrichtung drehenden Eigenschaften und mindestens einer der zweiten Bereiche mit zirkular polarisierenden Eigenschaften angeordnet ist. Hierdurch wird es möglich, daß für den Betrachter in ein und demselben Betrachtungsbereich bei der Betrachtung durch einen ersten oder einen zweiten Polarisator jeweils vollständig unterschiedliche, komplexe Sicherheitsmerkmale sichtbar gemacht werden können. Es besteht damit keinerlei Abhängigkeit mehr zwischen der Gestaltung und Formgebung der als Analysatortool verwendeten Polarisatoren und dem Sicherheitselement, wie dies bei kodierten Sicherheitsmerkmalen der Fall ist.

Besonders eindrucksvolle und schwer nachahmbare Sicherheitsmerkmale lassen sich dadurch generieren, daß das erste Sicherheitsmerkmal ein Objekt umfaßt, dem erste Bereiche mit variierende Azimutorientierung zur Generierung eines Graustufenbildes zugeordnet sind. Weiter kann auch das zweite Sicherheitsmerkmal ein Objekt umfassen, dem zweite Bereiche mit variierender Azimutorientierung zur Generierung eines Graustufenbildes zugeordnet sind, wobei das erste Graustufenbild bei Verwendung des ersten Polarisators und das zweite Graustufenbild bei Verwendung des zweiten Polarisators sichtbar wird.

Weiter ist es möglich, daß das Sicherheitsmerkmal zwei oder mehrere Bereiche umfaßt, in denen unterschiedliche optisch anisotrope Polymere mit unterschiedlicher Händigkeit partiell aufgebracht sind. Die hier wie oben beschrieben durch eine diffraktive Struktur eingebrachten und selektiv mit einem Linear- oder Zirkularpolarisator visualisierbaren Bereiche können so durch gezielte Verwendung von linksdrehenden oder rechtsdrehenden Flüssigkristallmaterialien in der Fälschungssicherheit weiter verbessert werden, da neben der Sichtbarmachung des ersten Latentbildes durch einen Linearpolarisator die Betrachtung durch einen links-oder rechtsdrehenden Zirkularpolarisator zu unterschiedlichen weiteren Latentbildern führt.

So werden für den Betrachter abhängig von der Art des verwendeten Polarisators (Polarisator für linear polarisiertes Licht, Polarisator für links- oder rechtshändisch zirkular polarisiertes Licht) und abhängig von der Winkellage des Polarisators zur Folie unterschiedliche Objekte sichtbar.

Um die Fälschungssicherheit weiter zu erhöhen, können zudem erste oder zweite Bereiche zur Codierung eines dritten Sicherheitsmerkmals bzw. eines vierten Sicherheitsmerkmals angeordnet sein, die bei Betrachtung durch einen zugeordneten dritten bzw. vierten mit einem zugeordneten dekodieren Polarisationsmuster versehenen Polarisator sichtbar werden. Besonders vorteilhaft ist es jedoch, erste und zweite Bereiche zur Codierung eines fünften Sicherheitsmerkmals anzuordnen, die bei Betrachtung durch einen mit einem zugeordneten dekodierenden Polarisationsmuster versehenen fünften Polarisator sichtbar ist, der Bereiche zur Decodierung von linear polarisiertem Licht und Bereiche zur Decodierung von zirkular polarisiertem Licht aufweist.

Weiter ist es zur Erhöhung der Fälschungssicherheit möglich, in die Folie eine weitere Schicht mit einer optisch wirksamen diffraktiven Struktur einzubringen, die bspw. ein Hologramm oder ein Kinegram® Sicherheitsmerkmal generiert. Die Erhöhung der Fälschungssicherheit kann weiter durch das Einbringen eines Dünnfilmschichtsystems in die Folie erreicht werden, das Farbverschiebungen mittels Interferenz erzeugt. Wird die Folie als reflektives Element mit einer reflektierenden Schicht, insbesondere einer metallischen Schicht oder einer HRI-Schicht ausgestaltet, so kann durch die partielle Ausbildung der reflektierenden Schicht ein weiteres optisch erkennbares Sicherheitsmerkmal bereitgestellt werden.

Besonders vorteilhaft ist es hier, wenn die reflektierende Schicht von einer Schicht aus einem cholesterischen Flüssigkeitskristall-Material gebildet wird, die einen blickwinkelabhängigen Farbverschiebungseffekt als weiteres optisch erkennbares Sicherheitsmerkmal generiert. Dies kann wahlweise in Kombination mit einer zusätzlichen halbtransparenten Schicht erfolgen, insbesondere einer dünnen Aluminiumschicht, die zwischen der ersten Schicht auf dem anisotropen bildtragenden Polymer und der cholesterischen Flüssigkristallmaterial-Schicht liegt.

Die Folie wird vorzugsweise als optisches Sicherheitselement zur Sicherung von Banknoten, Kreditkarten, Ausweispapieren und zur Warensicherung verwendet. Weiter ist es besonders vorteilhaft, die von einer erfindungsgemäßen Folie bereitgestellten verdeckten optischen Sicherungsmerkmale als maschinenlesbare optische Sicherheitsmerkmale auszugestalten, in die maschinenlesbare Informationen kodiert sind, wie z. B. eindimensionale oder zweidimensionale Barcodes.

Im Folgenden wird die Erfindung anhand von mehreren Ausführungsbeispielen unter Zuhilfenahme der beiliegenden Zeichnungen beispielhaft erläutert.
- Fig.1: zeigt beispielhaft eine schematische Darstellung der sich für einen Betrachter bei Betrachtung einer erfindungsgemäßen Folie durch unterschiedliche Polarisatoren ergebenden Darstellungen.
- Fig. 2: zeigt eine Schnittdarstellung eines Ausschnitts aus einem Sicherheitsdokument mit der Folie nach Fig. 1 und zweier unterschiedlicher Polarisatoren.
- Fig. 3: zeigt eine Schnittdarstellung eines Details der Folie nach Fig. 1.
- Fig. 4a und Fig. 4b: zeigen schematische Darstellung verschiedener diffraktiver Strukturen
- Fig. 5: zeigt eine schematische Darstellung eines Ausschnitts einer anisotropen Polymerschicht der Folie nach Fig. 1.
- Fig. 6: zeigt eine Schnittdarstellung eines Sicherheitsdokuments mit einer erfindungsgemäßen Folie sowie eines Polarisators für ein weiteres Ausführungsbeispiel der Erfindung.
- Fig. 7: zeigt eine Schnittdarstellung eines Sicherheitsdokuments mit einer erfindungsgemäßen Folie für ein weiteres Ausführungsbeispiel der Erfindung.
- Fig. 8: zeigt eine Schnittdarstellung durch eine erfindungsgemäße Folie für ein weiteres Ausführungsbeispiel der Erfindung.

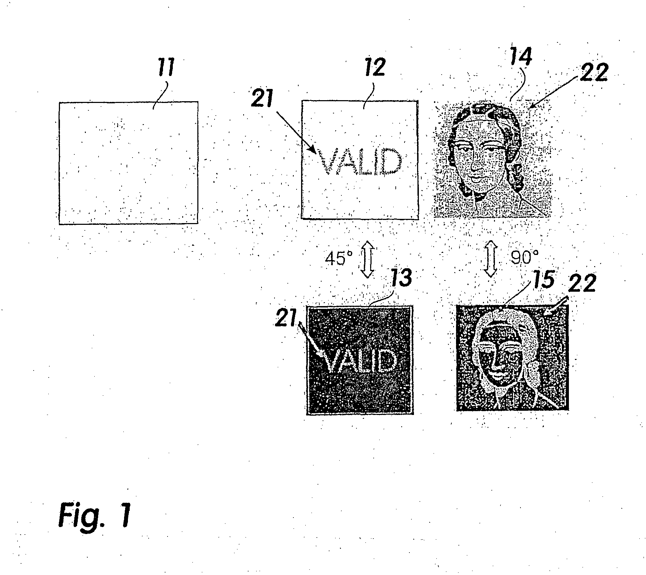

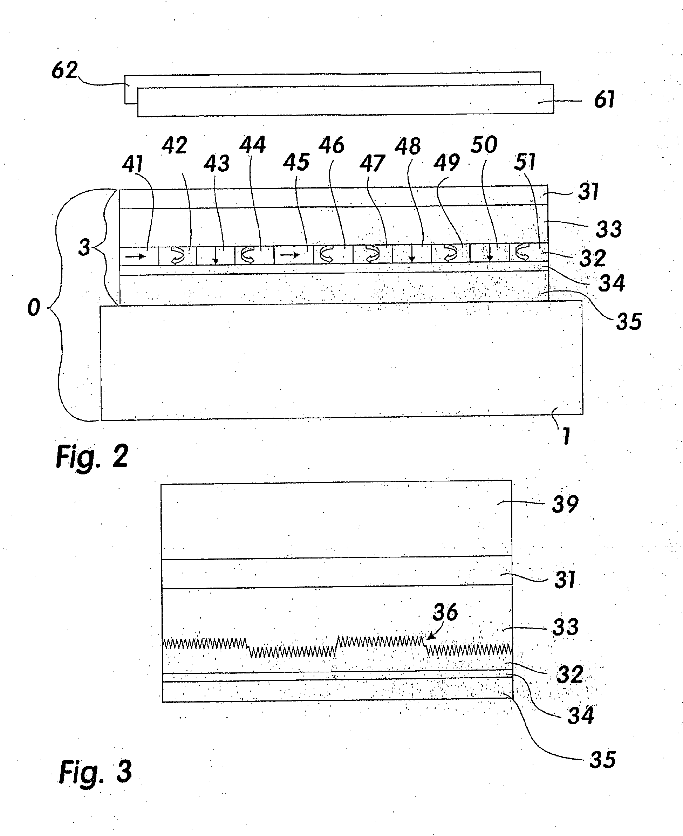

Fig. 1 zeigt verschiedene Darstellungen 11, 12, 13, 14 und 15, die sich für den Betrachter bei Betrachtung des in Fig. 2 verdeutlichten Sicherheitsdokuments bei Betrachtung ohne Polarisator, bei Betrachtung durch einen Linearpolarisator und bei Betrachtung durch einen Zirkularpolarisator ergeben. Die Darstellung 11 ergibt sich für den Betrachter bei Betrachtung ohne Polarisator. Die Darstellungen 12 und 13 ergeben sich für den Betrachter bei Betrachtung durch einen Linearpolarisator, wobei der Linearpolarisator bei der Darstellung 13 gegenüber der Darstellung 12 um 45 ° verdreht ist. Die Darstellungen 14 und 15 ergeben sich für den Betrachter bei Betrachtung durch einen Zirkularpolarisator, wobei der Zirkularpolarisator bei der Darstellung 15 gegenüber der Darstellung 14 um 90 ° verdreht ist. Wie in Fig. 1 dargestellt ergibt sich so für den Betrachter bei Verwendung eines Linearpolarisators ein erstes Sicherheitsmerkmal 21, nämlich der Schriftzug "VALID" und bei Betrachtung durch den Zirkularpolarisator ein zweites Sicherheitsmerkmal 22, nämlich die Darstellung von Clara Schumann.

Der genaue Aufbau des Sicherheitsdokuments, das den anhand von Fig. 1 erläuterten Effekt zeigt, wird nun anhand der Figuren Fig. 2, Fig. 3 und Fig. 5 erläutert:
Fig. 2 zeigt den schematischen Aufbau eines Sicherheitsdokumentes 0 und zwei Polarisatoren, nämlich einen Linearpolarisator 61 und einen Zirkularpolarisator 62.

Bei dem Sicherheitsdokument 0 handelt es sich beispielsweise um eine Banknote, einen Ausweis, ein Ticket oder Softwarezertifikat. Das Sicherheitsdokument 0 besteht aus einem Trägerelement 1 und einer auf dem Trägerelement aufgebrachten (oder in das Trägerelement eingebrachten) Folie 3. Das Trägerelement 1 besteht hier beispielsweise aus Papier oder einem Kunststoffmaterial. Die Folie 3 ist auf dem Träger vorzugsweise in Form eines Sicherheitsstreifens oder als Sicherheits-Patch aufgebracht, bzw. als Sicherheitsfaden eingebracht. Das Trägerelement 1 kann zusätzlich weitere Sicherheitsmerkmale enthalten. Das Trägerelement 1 kann beispielsweise farbig bedruckt sein und/oder Prägungen, beispielsweise den Namen des Karteninhabers, aufweisen.

Die Folie 3 wird vorzugsweise als Übertragungslage einer Transferfolie, insbesondere eine Heißprägefolie auf das Trägerelement 1 aufgebracht. Die Folie 3 weist hierbei eine Schutzlackschicht 31, eine Replikationsschicht 33, eine anisotrope Polymerschicht 32, eine Reflexionsschicht 34 und eine Kleberschicht 35 auf.

Die Schutzlackschicht 31 hat vorzugsweise eine Dicke von etwa 0,3 bis 1,2 µm. Die Schicht 33 ist eine Replikationsschicht, in die mittels eines Prägewerkzeugs diffraktive Strukturen eingeprägt sind. Die Replikationsschicht 33 besteht hierbei vorzugsweise aus einem transparenten, thermoplastischen Kunststoffmaterial, das beispielsweise durch ein Druckverfahren aufgebracht werden kann.

Der Replizierlack hat hierbei beispielsweise folgende Zusammensetzung:

| **Komponente** | **Gew.-Teile** |
|---|---|
| hochmolekulares PMMA-Harz | 2000 |
| Silikonalkyd | 300 |
| nichtionisches Netzmittel | 50 |
| niedrigviskose Nitrocellulose | 750 |
| Methylethylketon | 12000 |
| Toluol | 2000 |
| Diacetonalkohol | 2500 |

Die Replikationsschicht 33 wird so beispielsweise mittels einer Linienraster-Tiefdruckwalze mit einem Auftraggewicht von 2,2 g/m² nach Trocknung aufgebracht und sodann in einem Trockenkanal bei einer Temperatur von 100 bis 120 °C getrocknet. In die Replikationsschicht 33 wird sodann bei etwa 130 °C mittels einer beispielsweise aus Nickel bestehenden Matrize eine diffraktive Struktur eingeprägt. Beim Prägen der diffraktiven Struktur wird die Matrize vorzugsweise elektrisch aufgeheizt. Vor dem Abheben der Matrize von der Replikationsschicht 33 nach der Prägung kann die Matrize wieder abgekühlt werden. Nach Einprägen der diffraktiven Struktur wird der Replizierlack durch Vernetzung oder in sonstiger Weise erhärtet.

Auf die Replikationsschicht 33 wird sodann eine Schicht aus einem optisch anisotropen Polymermaterial, vorzugsweise einem Flüssigkristall-Material (LC = Liquid Cristal) aufgebracht. Im Prinzip sind alle in den vorgenannten Schriften angeführten Flüssigkristall-Materialien für die Schicht 32 verwendbar. Vorzugsweise wird ein nematisches Flüssigkristall-Material der OPALVA^{®}-Reihe der Fa. Vantico AG, Basel, CH, eingesetzt. Dieses Flüssigkristall-Material wird vollflächig oder partiell, vorzugsweise mittels eines Druckprozesses, auf die Replizierschicht 33 aufgebracht, vorzugsweise in einem Auftragegewicht, das bei planarer Oberfläche eine Schichtdicke von 0,5 µm bis 5 µm ergeben würde. Die nach Auftrag des Flüssigkristall-Materials sich lokal ausbildende effektive Schichtdicke der anisotropen Polymerschicht 32 wird hierbei von der in die Replikationsschicht 33 eingeprägten diffraktiven Struktur beeinflußt.

Anschließend werden die Flüssigkristalle der anisotropen Polymerschicht 32 bei Bedarf unter Zufuhr von Wärme ausgerichtet. Abschließend erfolgt eine UV-Härtung oder thermisch induzierte radikalische Vernetzung des Flüssigkristall-Materials zur Fixierung der Orientierung der Flüssigkristall-Moleküle.

Weiter ist es auch möglich, daß die aufgedruckte Schicht aus einem lösungsmittelhaltigen Flüssigkristall-Material einem Trocknungsprozeß unterzogen wird und sich die Flüssigkristall-Moleküle während der Verdampfung des Lösungsmittels gemäß der diffraktiven Struktur orientieren. Auch ist es möglich, daß lösungsmittelfreies Flüssigkristall-Material durch einen Druckprozeß aufgebracht wird, wonach die Orientierung durch Vernetzung fixiert wird.

Auf die anisotrope Polymerschicht 32 kann weiter optional eine Schutzlackschicht durch ein Druckverfahren aufgebracht werden. Diese Schutzlackschicht hat beispielsweise eine Dicke von 0,5 µm bis zu 3 µm und besteht vorzugsweise aus UV-vernetzbaren Acrylaten oder abriebfesten thermoplastischen Acrylaten.

Sodann wird die Reflektorschicht 34 aufgebracht. Bei der Reflektorschicht 34 handelt es sich vorzugsweise um eine dünne aufgedampfte Metallschicht oder um eine HRI-Schicht (HRI = High Refraction Index). Als Material für die Metallschicht kommen im wesentlichen Chrom, Aluminum, Kupfer, Eisen, Nickel, Silber oder Gold oder eine Legierung mit diesen Materialien in Frage.

Sodann wird die Kleberschicht 35 aufgebracht, bei der es sich vorzugsweise um einen thermisch aktivierbaren Kleber handelt.

Bedingt durch unterschiedliche Strukturparameter der in die angrenzende Replikationsschicht 33 eingebrachten diffraktiven Struktur besitzt die anisotrope Polymerschicht 32 bereichsweise unterschiedliche Polarisationseigenschaften. So sind in Fig. 2 beispielhaft mehrere nebeneinander liegende Bereiche 41 bis 51 gezeigt, in denen die anisotrope Polymerschicht 32 unterschiedliche Polarisationseigenschaften besitzt. In ersten Bereichen 41, 43, 45, 48 und 50 besitzt die anisotrope Polymerschicht 32, abhängig von dem für die anisotrope Polymerschicht 32 verwendeten Flüssigkristall-Material, linear-polarisierende oder die in Polarisationsrichtung drehende Eigenschaften. In zweiten Bereichen 42, 44, 46, 47, 49 und 51 besitzt die anisotrope Polymerschicht 32 im wesentlichen zirkularpolarisierende Eigenschaften. Unter zirkularpolarisierenden Eigenschaften werden hierbei jede Verschiebung der Phasenlage des Feldvektors in X- und Y-Richtung verstanden, für die nicht die Bedingungen der Phasenlage von linearpolarisiertem Licht (Phasendifferenz = m·π, m = ganze Zahl) gilt.

Wie in Fig. 2 angedeutet, unterscheidet sich die Azimutorientierung der Flüssigkristall-Moleküle in den linear polarisierenden Bereichen 41 und 45 einerseits und 43, 48 und 50 andererseits. Weiter besitzt die anisotrope Polymerschicht 32 beispielsweise in den Bereichen 42, 47 und 49 rechtshändisch zirkular-polarisierende Eigenschaften und in den Bereichen 44, 46 und 51 linkshändisch zirkular-polarisierende Eigenschaften. Die Händigkeit des zirkular polarisierenden Lichtes wird dabei durch das im jeweiligen Bereich eingesetzte Flüssigkristallmaterial bestimmt, das z. B. durch ein Druckverfahren partiell aufgebracht wird.

Fig. 3 zeigt beispielhaft den schematischen Aufbau einer Transferfolie, die für die Herstellung des Sicherheitsdokuments 0 verwendet werden kann. Fig. 3 zeigt eine Trägerfolie 39 und eine Übertragungslage, die aus der Schutzlackschicht 31 der Replikationsschicht 33, der anisotropen Polymerschicht 32, der Reflektorschicht 34 und der Kleberschicht 35 besteht. Die Trägerfolie 39 hat beispielsweise eine Dicke von etwa 12 µm bis 50 µm und besteht bevorzugt aus einer Polyesterfolie.

Zwischen der Trägerfolie 39 und der Schutzlackschicht 31 ist bevorzugt eine hier nicht gezeigte Ablöseschicht angeordnet.

Wie in Fig. 3 dargestellt, ist in der Replikationsschicht 33 eine diffraktive Struktur 36 eingeprägt. Die Strukturparameter der diffraktiven Struktur unterscheiden sich hier, wie in Fig. 3 angedeutet, in Bereichen, die linear-polarisierenden oder die Polarisationsrichtung des einfallenden Lichts drehenden ersten Bereichen einerseits zugeordnet sind und zirkular-polarisierenden Bereichen andererseits zugeordnet sind. Die Orientierung der Flüssigkristalle in diesen Bereichen wird im wesentlichen durch die Azimutorientierung der diffraktiven Struktur bestimmt. Die Polarisationseigenschaften, d. h. ob ein Bereich zirkular polarisierende Eigenschaften oder linear polarisierende bzw. die Polarisationsrichtung drehende Eigenschaften besitzt, wird im wesentlichen durch die mittlere Strukturtiefe der diffraktiven Struktur in dem jeweiligen Bereich bestimmt. Bereits Unterschiede der mittleren Strukturtiefe, die im Bereich von 200 bis 500 nm liegen, und damit die λ/4-Bedingung nicht erfüllen, können hierbei eine Änderung der Polarisationseigenschaften des jeweiligen Bereiches bewirken.

Gute Ergebnisse lassen sich beispielsweise bei der Wahl folgender Strukturen für mit einem Zirkularpolarisator visualisierbare Bereiche verwenden:
Es wird ein Kombinationsgitter verwendet, das aus einer isotropen Mattstruktur und einem Lineargitter hoher Linienzahl besteht. Als Lineargitter kann hierbei beispielsweise ein Sinusgitter verwendet werden. Die Mattstruktur hat hierbei bevorzugt eine Tiefe von 200 nm bis 800 nm, sowie eine Korrelationslänge im µm-Bereich.

Eine hierfür verwendbare isotrope Mattstruktur besteht beispielsweise aus im wesentlichen identisch geformten dreidimensionalen Strukturelementen, deren Grundflächen laterale Ausdehnungen im Bereich von 1 µm bis 100 µm besitzen und deren Seitenfläche einen Neigungswinkel von 45° zu einer freien Oberfläche der Folie einschließen. Hierbei ist es auch möglich, isotrope Mattstrukturen mit kleineren lateralen Abmessungen zu verwenden, die nicht mehr exakt periodisch auf der Basisebene angeordnet sind. Diese Mattstruktur wird sodann mit dem oben beschriebenen Liniengitter hoher Linienzahl, beispielsweise einer Linienzahl von 1.500 Linien pro mm bis 3.500 Linien pro mm und einer Tiefe von 50 nm bis 500 nm, beispielsweise additiv, multiplikativ, usw. überlagert. So ergibt sich beispielsweise die in

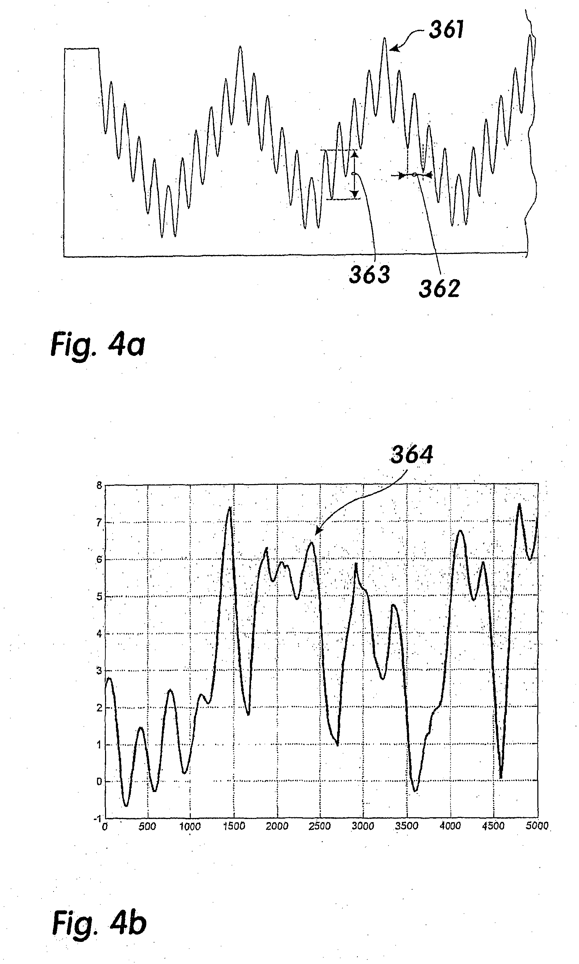

Fig. 4a gezeigte Struktur 361, die von der Überlagerung einer derartigen isotropen räumlichen Mattstruktur mit einem Liniengitter gebildet wird, das eine Strukturtiefe 363 und eine Gitterperiode 362 besitzt. Fig. 4a stellt hierbei lediglich eine schematische, nicht maßstabsgetreue Darstellung einer derartigen Mattstruktur dar. Gemäß des bevorzugten Ausführungsbeispiels der Erfindung ist das hochfrequente Sinusgitter wesentlich flacher als die Mattstruktur.

Weiter können als Mattstrukturen auch isotrope Mattstrukturen eingesetzt werden, in denen die mikroskopisch feinen Reliefstrukturelemente zufällig verteilt sind, so dass die Mattstruktur nur mittels statistischer Kenngrößen, wie beispielsweise Mittenrauhigkeit, Korrelationslänge usw. beschrieben werden kann.

Bezüglich der Details verwendbarer Mattstrukturen wird weiter auf die WO 03/055691 A1 verwiesen.

Fig. 4b zeigt nun eine schmatische Darstellung einer Struktur 364, die aus der Überlagerung einer Mattstruktur mit einer statischen Verteilung der Strukturelemente und einer oben beschriebenen Liniengitter einer hohen Linienzahl gebildet ist. In dem Ausführungsbeispiel nach Fig. 4b ist ein relativ flaches, hochfrequentes Sinusgitter mit einer gröberen, deutlich tieferen Mattstruktur überlagert.

Informationen entstehen dadurch, dass die Strukturen in verschiedener Azimutorientierung vorliegen können und somit verschiedene Grautöne eines Graustufenbildes kodieren können. Ein einfacher Fall eines Grautonbildes ist in Fig. 1 dargestellt. Fig. 1 zeigt ein Grautonbild mit zwei Graustufen, d.h, ein Schwarz-Weiß-Bild. Hier besteht der Hintergrund, nämlich "Quadrat", und Vordergrund, nämlich "Clara Schumann", aus derselben Basisstruktur, wobei für den Hintergrund eine Azimutorientierung des Lineargitters von 90° und für den Vordergrund eine Azimutorientierung des Liniengitters von 0° gewählt ist. Für die Bereiche, die der Darstellung dieser Informationen (Quadrat, Clara Schumann) zugeordnet sind, wird beispielsweise ein Kombinationsgitter mit einer Mattstruktur einer Tiefe von 500 nm sowie einer lateralen Korrelationslänge von einigen µm sowie einem Sinusgitter einer Linienzahl von 2.800 Linien/mm und einer Tiefe von 120 nm verwendet.

Als Struktur-Kombination, welche mittels des Linearpolarisators visualisiert werden, wird beispielsweise ein Lineargitter mit einer relativ hohen Linienzahl verwendet, wobei auch das oben beschriebene Kombinationsgitter als Hintergrund dienen kann. Verwendbare Liniengitter besitzen beispielsweise eine Linienzahl von 2.000 Linien/mm bis 3.500 Linien/mm und eine Tiefe von 50 nm bis 500 nm. Bereiche, die der Darstellung der Information "VALID" nach Fig. 1 zugeordnet sind, sind so beispielsweise an einem Lineargitter einer Linienzahl von 2.860 Linien/mm und einer Tiefe von etwa 120 nm orientiert. Die Orientierung der Gitter zueinander ist hierbei so gewählt, dass der Kontrast, der zwischen dem Lineargitter (unter 45°) und dem Kombinationsgitter (unter 0° oder 90°) besteht, mittels eines Linearpolarisators sichtbar gemacht werden kann.

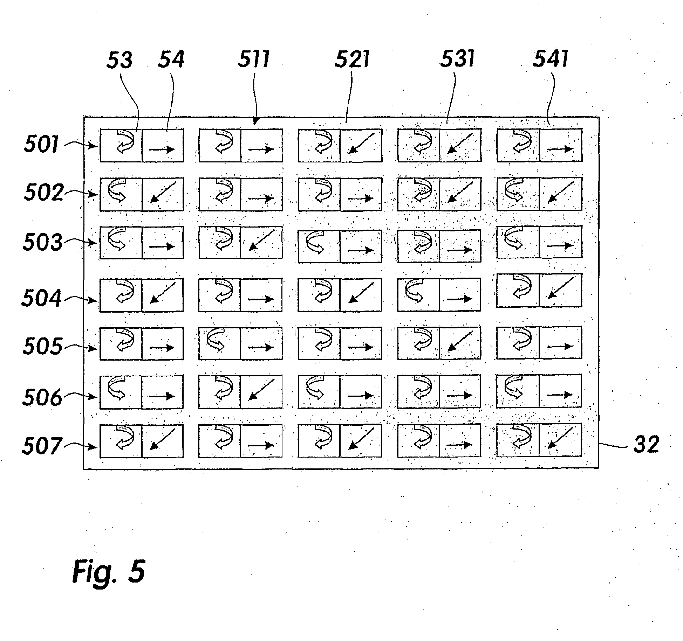

Anhand von Fig. 5 wird nun eine vorteilhafte Anordnung der ersten und zweiten Bereiche der anisotropen Polymerschicht 32 beschrieben:
Fig. 5 zeigt einen Ausschnitt der anisotropen Polymerschicht 32, der eine Vielzahl von an einem Linienraster ausgerichteten Bildbereichen 501 bis 541 zeigt. Jeder dieser Bildbereiche weist zumindest einen ersten Bereich mit linear polarisierenden oder die Polarisationsrichtung drehenden Eigenschaften und mindestens einen zweiten Bereich mit zirkular polarisierenden Eigenschaften auf. So weist beispielsweise der Bildbereich 501 einen derartigen ersten Bereich 54 und einen derartigen zweiten Bereich 53 auf. Die anisotrope Polymerschicht 32 ist in dem interessierenden Bereich vorzugsweise zu je 50 % mit einer Liniendichte gerastert, welche unterhalb des Auflösungsvermögens des menschlichen Auges liegt. Das Linienraster besteht so beispielsweise aus 40 µm Linien mit 80 µm Abstand. Es können jedoch auch mehr als zwei Informationen ineinander gerastert werden, wobei dann der Abstand der Rasterlinien unterhalb des Auflösungsvermögens des menschlichen Auges liegen sollte.

Es ist auch möglich, dass die Folie 3 als transmissives Element ausgeführt ist und auf die Reflektionsschicht 34 verzichtet wird. Entsprechend den aufgezeigten Gesetzmäßigkeiten ist eine derartige transmissive Folie so mit linear polarisiertem oder zirkular polarisiertem Licht zu bestrahlen, wobei sich die Sicherheitsmerkmale 21 und 22 durch Betrachtung mit einem linear oder einem Zirkularpolarisator ergeben. Weiter ist auch eine Bestrahlung lediglich mit linear polarisiertem Licht und eine Beobachtung durch einen Linear- bzw. einen Zirkularpolarisator möglich. Hierbei wäre es auch möglich, einen derartigen Linearpolarisator bereits in die Folie 3 zu integrieren, so dass bei Durchlichtung mit unpolarisiertem Licht bei Betrachtung durch einen Linearpolarisator ein erstes Sicherheitsmerkmal und bei Betrachtung durch einen Zirkularpolarisator ein zweites Sicherheitsmerkmal sichtbar wird.

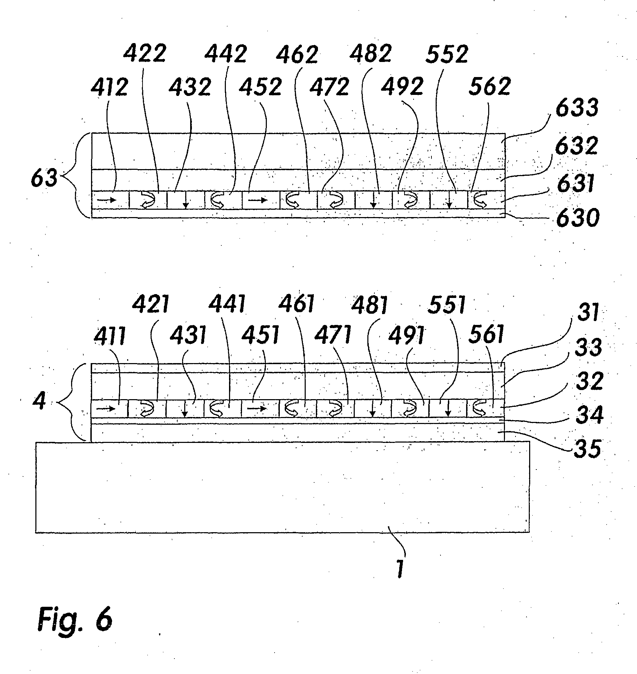

Anhand von Fig. 6 wird nun ein weiteres Ausführungsbeispiel der Erfindung erläutert, bei dem in eine erfindungsgemäße Folie weitere Informationen kodiert sind, die mittels eines speziell ausgestalteten Polarisators dekodierter sind.

Fig. 6 zeigt eine auf dem Trägerelement 1 aufgebrachte Folie 4, die die Schutzlackschicht 31, die Replikationsschicht 33, die anisotrope Polymerschicht 32, die Reflektorschicht 34 und die Kleberschicht 35 aufweist. Die Schutzlackschicht 31, die Replikationsschicht 33, die anisotrope Polymerschicht 32, die Reflektorschicht 34 und die Kleberschicht 35 sind wie die entsprechend bezeichneten Schichten nach Fig. 1 bis Fig. 5 ausgestaltet. Die anisotrope Polymerschicht 32 weist mehrere Bereiche 411, 421, 431, 441, 451, 461, 471, 481, 491, 551 und 501 auf, die als erste Bereiche mit linear polarisierenden oder anisotrope Polymerschicht drehenden Eigenschaften (411, 431, 451,481 und 551) oder als zweite Bereiche mit zirkular polarisierenden Eigenschaften (421, 441, 461, 471, 491 und 561) ausgestaltet sind. Mittels der speziellen Gestaltung dieser Bereiche sind in der Folie 4 die in den vorhergehenden Ausführungsbeispielen verdeutlichten Sicherheitsmerkmale in der Folie 4 implementiert, die zu einem bei Betrachtung durch einen Zirkularpolarisator und zum anderen bei Betrachtung durch einen Linearpolarisator sichtbar werden.

Weiter zeigt Fig. 6 einen der Folie 4 zugeordneten speziellen Polarisator 63, der sich im wesentlichen aus einem Träger 633, einer von zwei Schichten 632 und 631 gebildeten anisotrope Polymerschicht, die Bereiche zur Detektion von linear polarisiertem Licht und Bereiche zur Detektion von zirkular polarisiertem Licht aufweist, und einer Schutzlackschicht 630 zusammensetzt. Die Schicht 632 wird hierbei von einem linearen Polarisator und die Schicht 631 von einer an einer Replikationsschicht (nicht gezeigt) orientierten Flüssigkristallschicht gebildet, die entsprechend der anisotropen Polymerschicht 32 erste Bereiche 412, 432, 452, 482 und 552 aufweist, die die Polarisationsrichtung drehende Eigenschaften besitzen, und zweite Bereiche 422, 462, 472, 492 und 562 aufweist, die zirkular polarisierende Eigenschaften besitzen. Somit wird ein Polarisator 63 geschaffen, der in ersten Bereichen als Linearpolarisator und in zweiten Bereichen als Zirkularpolarisator wirkt. Alternativ ist es hierbei auch möglich, die PolarisationsRichtung der Schicht 632 abhängig von den jeweiligen Bereichen der Schicht 631 unterschiedlich zu wählen, so dass die detektierte Azimut-Winkelorientierung des linear polarisierten Lichtes bereichsweise unterschiedlich gewählt werden kann.

Durch eine entsprechend gewählte Anordnung der Bereiche 411, 421, 431, 441, 451, 461, 471, 481, 491, 551 und 561 in Relation zu den Bereichen 412, 422, 432, 442, 452, 462, 472, 482, 492, 552 und 562 ist es möglich, ein weiteres Sicherheitsmerkmal in der anisotropen Polymerschicht 32 zu kodieren, das nur mittels des speziellen Polarisators 63 sichtbar gemacht werden kann. Da für die Bildpunkte dieses Sicherheitsmerkmals Bildpunkte zweier verschiedener Sicherheitsmerkmale, nämlich linear polarisierende und zirkular polarisierende Bereiche, verwendbar sind, entfällt die Abhängigkeit dieses Sicherheitsmerkmals von der speziellen Formgebung und Gestalt eines einzelnen Sicherheitsmerkmales.

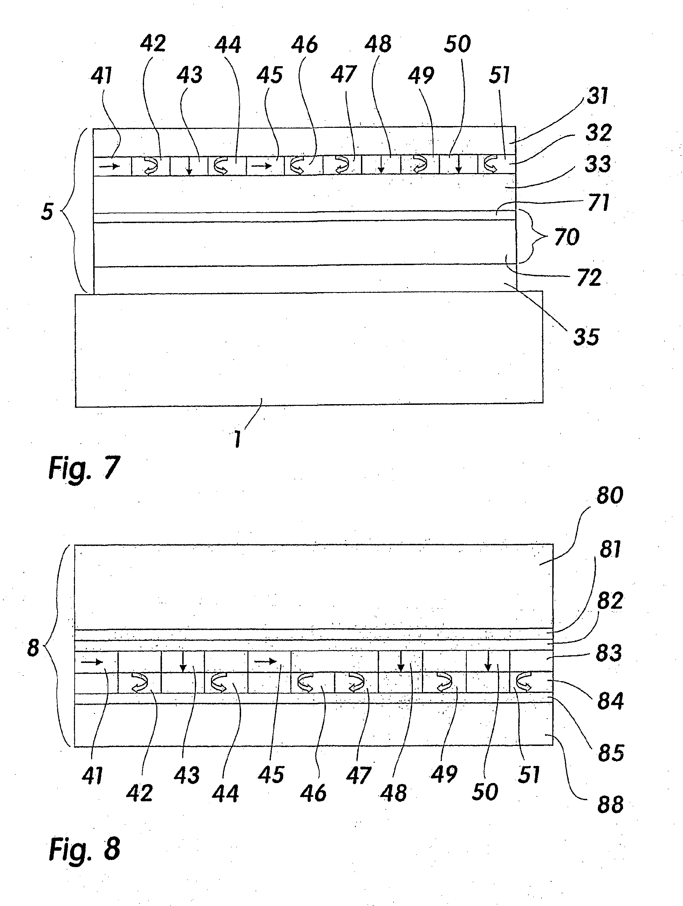

Fig. 7 zeigt eine weitere erfindungsgemäße Folie 5, die auf dem Trägerelement 1 aufgebracht ist. Die Folie 5 weist die Schutzlackschicht 31, die anisotrope Polymerschicht 32, die Replikationsschicht 33, ein Schichtsystem 70 und die Kleberschicht 35 auf. Die Schutzlackschicht 31, die anisotrope Polymerschicht 32, die Replikationsschicht 33 und die Kleberschicht 35 sind wie in den Ausführungsbeispielen nach Fig. 1 bis Fig. 5 beschrieben ausgestaltet.

Das Schichtsystem 70 stellt ein weiteres optisches Sicherheitsmerkmal zur Verfügung, das für den Betrachter ohne Verwendung eines Polarisators sichtbar ist. Bei dem Schichtsystem 70 handelt es sich so beispielsweise um eine optisch wirksame, mit einer Reflektorschicht versehene diffrative Struktur, die beispielsweise ein Hologramm als optisches Sicherheitsmerkmal bereit stellt. Es kann sich hierbei weiter auch um ein Dünnfilm-Schichtsystem handeln, das transmissiv oder reflektiv ausgeführt, einen blickwinkelabhängigen Farbverschiebungseffekt mittels Interferenz erzeugt. Gemäss dem hier im weiteren ausgeführten Ausführungsbeispiel handelt es sich bei dem Schichtsystem 70 um ein Schichtsystem, das aus einer Absorptionsschicht 71 und einer Schicht 72 aus einem cholesterischen Flüssigkristall-Material besteht. Als cholesterisches Flüssigkristall-Material können beispielsweise die in WO 01/55960 beschriebenen cholesterischen Flüssigkristall-Materialien verwendet werden. Die Schicht 72 besitzt hierbei vorzugsweise eine Schichtdicke von 1 bis 10 µm. Die Flüssigkristalle der Schicht 72 sind durch die Scherkräfte beim Auftrag orientiert. Falls erforderlich, kann auch eine weitere mikroverkratzte oder gebürstete Orientierungsschicht vor dem Auftrag des cholesterischen Flüssigkristallmaterials auf die Schicht 71 appliziert werden. Die Schicht 72 wirkt hierbei als Filter, der abhängig von dem Einfallswinkel des einfallenden Lichtes lediglich einen speziellen Wellenlängen-Anteil des Lichtes reflektiert, so dass ein blickwinkelabhängiger Farbverschiebungseffekt zu beobachten ist.

Um die oben beschriebenen Eigenschaften der anisotropen Polymerschicht 32 nicht durch die zirkular polarisierende Wirkung der Schicht 72 zu Nichte zu machen und um eine Erkennbarkeit des durch die Schicht 72 generierten Farbverschiebungseffektes sowohl in ersten als auch in zweiten Bereichen zu gewährleisten, wird hier eine Schicht 71 vorgesehen. Bei der Schicht 71 handelt es sich um einen halbdurchlässigen Spiegel, beispielsweise um eine dünne ggf. strukturierte Metallschicht, z.B. eine Aluminiumschicht einer Dicke von 1 nm bis 50 nm.

Die Schicht 71 bewirkt, dass ein Teil des einfallenden Lichtes an der Schicht 71 reflektiert wird und damit die bereits oben beschriebenen Effekte bewirkt. Nur ein Teil des einfallenden Lichtes tritt auf die Schicht 72 und wird von dieser zirkular polarisiert reflektiert. Damit ergibt sich durch das Schichtsystem 70 ein Schichtsystem, das einfallendes linear polarisiertes Licht sowohl als linear polarisiertes Licht, als auch als selektiv gefiltertes zirkular polarisiertes Licht reflektiert.

Die Schicht 35 stellt eine Kleberschicht dar, die wahlweise auch eingefärbt werden kann, um das optische Erscheinungsbild und/oder die optische Funktion (Absorption) der cholesterischen Schicht 72 zu verbessern.

Fig. 8 zeigt ein weiteres Ausführungsbeispiel der Erfindung.

Fig. 8 zeigt eine Prägefolie 8, die aus einer Trägerfolie 80, einer Schutzlackschicht 81, einer Retarderschicht 82, einer ersten anisotropen Polymerschicht 83, einer zweiten anisotropen Polymerschicht 84, einer Reflektorschicht 85 und einer Kleberschicht 88 besteht. Die Schutzlackschicht 81, die Reflektorschicht 85 und die Kleberschicht 88 sind wie die entsprechenden Schicht 30, 31, 34 und 35 nach den Ausführungsbeispielen von Fig. 1 bis Fig. 5 ausgestaltet. Die anisotropen Polymerschichten 83 und 84 bestehen jeweils aus einer Schicht aus einem orientierten Flüssigkristall-Material, die, wie zuvor in den Ausführungsbeispielen beschrieben, an einer Replikationsschicht mit diffraktiver Struktur orientiert wurden, oder mittels eines Transfer-Verfahrens auf die Folie aufgebracht worden sind. Im letzteren Fall bestehen die transferierten anisotropen Polymerschichten 83 und 84 vorzugsweise aus einer Kleberschicht, einer Orientierungsschicht und einer auf der Orientierungsschicht orientierten und sodann vernetzten Flüssigkristallschicht. Die Schichtdicken und die Flüssigkristall-Materialien der anisotropen Polymerschichten 83 und 84 sind hierbei so gewählt, dass die Anisotrope Polymerschicht 83 bereichsweise linear polarisierende Eigenschaften oder die Polarisationsrichtung drehende Eigenschaften besitzt und die anisotrope Polymerschicht 84 bereichsweise zirkular polarisierende Eigenschaften besitzt.

Wie in Fig. 8 gezeigt, sind die beiden anisotropen Polymerschichten 83 und 84 hierbei passergenau zueinander aufgebracht, so dass sich jeweils die Bereiche 41, 43, 45, 48 und 50 ergeben, in denen linear polarisierende oder die Polarisationsrichtung drehende Eigenschaften vorliegen und sich die Bereiche 42, 44, 46, 47, 49 und 51 ergeben, in der sich zirkular polarisierende Eigenschaften ergeben.

## Patentansprüche

1. Folie (3, 4, 5, 8), insbesondere Prägefolie, Laminierfolie oder Stickerfolie, wobei die Folie (3, 4, 5, 8) zumindest eine anisotrope Polymerschicht (32, 83, 84) aus einem zumindest partiell orientierten Flüssigkristall-Material aufweist,
wobei die anisotrope Polymerschicht (32) oder die anisotropen Polymerschichten (83, 84) aus einem zumindest partiell orientierten Flüssigkristall-Material einen oder mehrere ein erstes Sicherheitsmerkmal (21) bildende erste Bereiche (41, 43, 45, 48, 50, 54) aufweist bzw. aufweisen, in denen die anisotrope Polymerschicht (32, 83) linear polarisierende oder die Polarisationsrichtung drehende Eigenschaften besitzt, und welche bei Betrachtung durch einen ersten Polarisator (61) visualisierbar ist, und einen oder mehrere ein zweites Sicherheitsmerkmal (22) bildende zweite Bereiche (42, 44, 46, 47, 49, 51, 53) aufweist bzw. aufweisen,
**dadurch gekennzeichnet,**
**dass** die anisotrope Polymerschicht (32, 84) des zweiten Sicherheitsmerkmals (22) zirkular polarisierende Eigenschaften besitzt,
wobei das zweite Sicherheitsmerkmal bei Betrachtung durch einen zweiten auf einen anderen Polarisationszustand ansprechenden Polarisator (62) visualisierbar ist.

2. Folie nach Anspruch 1,
**dadurch gekennzeichnet,**
**daß** eine der zumindest einen anisotropen Polymerschicht (32) sowohl erste Bereiche (41, 43, 45, 48, 50, 54) mit linear polarisierenden oder die Polarisationsrichtung drehenden Eigenschaften, als auch zweite Bereiche (432, 44, 46, 47, 49, 51, 53) mit zirkular polarisierenden Eigenschaften aufweist, wobei bevorzugt erste Bereiche und zweite Bereiche der anisotropen Polymerschicht (32) nebeneinander angeordnet sind.

3. Folie nach einem der vorgehenden Ansprüche,
**dadurch gekennzeichnet,**
**daß** die Folie (3, 4, 5, 8) zumindest eine Replikationsschicht (33) aufweist, auf der die anisotrope Polymerschicht (32) aus einem Flüssigkristall-Material aufgebracht ist, und daß in die der anisotropen Polymerschicht (32) aus einem Flüssigkristall-Material zugewandten Oberfläche der Replikationsschicht (33) eine diffraktive Struktur (36, 361, 364,365) zur Orientierung der anisotropen Polymerschicht (32) aus einem Flüssigkristall-Material eingebracht ist.

4. Folie nach Anspruch 3,
**dadurch gekennzeichnet,**
**daß** sich ein oder mehrere Strukturparameter der diffraktiven Struktur (36, 361, 364, 365) in ersten Bereichen und zweiten Bereichen unterscheiden, die korrespondierenden ersten Bereich (41, 43, 45, 48, 50, 54) mit linear polarisierenden oder die Polarisationsrichtung drehenden Eigenschaften bzw. zweiten Bereichen (42, 44, 46, 47, 49, 51, 53) mit zirkular polarisierenden Eigenschaften der angrenzenden anisotropen Polymerschicht (32) zugeordnet sind.

5. Folie nach Anspruch 4,
**dadurch gekennzeichnet,**
**daß** die mittlere Strukturtiefe der diffraktiven Struktur (36, 361, 364, 365) in den ersten Bereich und den zweiten Bereichen unterschiedlich ist.

6. Folie nach einem der Ansprüche 3 bis 5
**dadurch gekennzeichnet,**
**daß** die diffraktive Struktur (36, 361) aus einer Überlagerung einer ersten Struktur zur Orientierung des Flüssigkristall-Materials und einer zweiten Struktur zur Einstellung der linear polarisierenden Eigenschaften, die Polarisationsrichtung drehenden Eigenschaften oder der zirkular polarisierenden Eigenschaften der an die Replikationsschicht (33) angrenzenden anisotropen Polymerschicht (32) gebildet ist.

7. Folie nach Anspruch 6,
**dadurch gekennzeichnet,**
**daß** die erste Struktur ein Liniengitter mit einer Spatialfrequenz von 1.500 Linien/mm bis 3.500 Linien/mm und einer Tiefe von 50 nm bis 500 nm ist.

8. Folie nach Anspruch 7,
**dadurch gekennzeichnet,**
**daß** das Liniengitter bereichsweise eine unterschiedliche Azimutorientierung aufweist.

9. Folie nach einem der Ansprüche 6 bis 8,
**dadurch gekennzeichnet,**
**daß** die zweite Struktur aus einer Struktur besteht, deren mittlere Strukturtiefe sich in ersten und zweiten Bereichen unterscheidet.

10. Folie nach einem der Ansprüche 6 bis 9,
**dadurch gekennzeichnet,**
**daß** die zweite Struktur aus einer Mattstruktur mit einer Strukturtiefe von 200 nm bis 800 nm besteht, die entweder in den ersten Bereichen oder in den zweiten Bereichen vorgesehen ist.

11. Folie nach Anspruch 10,
**dadurch gekennzeichnet,**
**daß** die Mattstruktur eine isotrope Mattstruktur mit einer lateralen Korrelationslänge von 1 bis 10 µm ist.

12. Folie (8) nach Anspruch 1,
**dadurch gekennzeichnet,**
**daß** die Folie (8) zwei oder mehr anisotrope Polymerschichten (83, 84) aus einem zumindest partiell orientierten Flüssigkristall-Material aufweist, wobei eine der anisotropen Polymerschichten (83) Bereiche (41, 43, 45, 48, 50) mit linear polarisierenden oder die Polarisationsrichtung drehenden Eigenschaften und eine zweite der anisotropen Polymerschichten-Bereiche (42, 44, 46, 47, 49, 51) mit zirkular polarisierenden Eigenschaften aufweist.

13. Folie nach einem der vorgehenden Ansprüche,
**dadurch gekennzeichnet,**
**daß** die Folie (3, 5, 8) eine weitere anisotrope Polymerschicht (31, 82) aufweist, die zumindest partielle zirkular polarisierende Eigenschaften besitzt, wobei Bereiche der weiteren anisotropen Polymerschicht (31, 82) mit zirkular polarisierenden Eigenschaften über oder unterhalb der ersten und zweiten Bereiche (41 bis 54) der zumindest einen anisotropen Polymerschicht (32, 83, 84) angeordnet sind.

14. Folie (3) nach einem der vorgehenden Ansprüche,
**dadurch gekennzeichnet,**
**daß** die mindestens eine anisotrope Polymerschicht (32) eine Vielzahl von Bildbereichen (501 bis 541) aufweist, die eine Ausdehnung kleiner als 40 µm besitzen, wobei in jedem der Bildbereiche (501 bis 541) zumindest einer der ersten Bereiche (53) mit linear polarisierenden oder die Polarisationsrichtung drehenden Eigenschaften und mindestens einer der zweiten Bereiche (54) mit zirkular polarisierenden Eigenschaften angeordnet sind.

15. Folie nach einem der vorhergehenden Ansprüche,
**dadurch gekennzeichnet,**
**daß** das erste Sicherheitsmerkmal ein Objekt umfaßt, dem erste Bereiche mit variierender Azimutorientierung zur Generierung eines Graustufenbildes zugeordnet sind.

16. Folie nach einem der vorhergehenden Ansprüche,
**dadurch gekennzeichnet,**
**daß** das zweite Sicherheitsmerkmal ein Objekt umfaßt, dem zweite Bereiche mit variierender Azimutorientierung zur Generierung eines Graustufenbildes zugeordnet sind.

17. Folie nach einem der vorhergehenden Ansprüche,
**dadurch gekennzeichnet,**
**daß** das erste Sicherheitsmerkmal zwei oder mehrere Objekte umfaßt, denen erste Bereiche mit unterschiedlich linear polarisierenden oder die Polarisationsrichtung drehenden Eigenschaften zugeordnet sind.

18. Folie nach einem der vorhergehenden Ansprüche,
**dadurch gekennzeichnet,**
**daß** das zweite Sicherheitsmerkmal zwei oder mehrere Objekte umfaßt, denen zweite Bereiche mit unterschiedlich zirkular polarisierenden Eigenschaften, insbesondere eine linkshändisches oder rechtshändisches zirkulares Polarisationsvermögen, zugeordnet sind.

19. Folie (4) nach einem der vorhergehenden Ansprüche,
**dadurch gekennzeichnet,**
**daß** erste oder zweite Bereiche zur Codierung eines dritten Sicherheitsmerkmals bzw. eines vierten Sicherheitsmerkmals angeordnet sind, das bei Betrachtung durch einen zugeordneten dritten bzw. vierten mit einem zugeordneten dekodierenden Polarisationsmuster versehenen Polarisator sichtbar ist.

20. Folie (4) nach einem der vorhergehenden Ansprüche,
**dadurch gekennzeichnet,**
**daß** erste und zweite Bereiche (411, 421, 431, 441, 451, 461, 471, 481, 491, 551, 561) zur Codierung eines fünften Sicherheitsmerkmals angeordnet sind, das bei Betrachtung durch einen mit einem zugeordneten dekodierenden Polarisations- Muster versehenen fünften Polarisator (63), der Bereiche (412, 432, 452, 482, 552) zur Detektion von linear polarisiertem Licht und Bereiche (422, 441, 462, 472, 492, 562) zur Detektion von zirkular polarisiertem Licht aufweist, sichtbar ist.

21. Folie nach einem der vorhergehenden Ansprüche,
**dadurch gekennzeichnet,**
**daß** die Folie eine weitere Schicht mit einer weiteren optisch wirksam diffraktiven Struktur aufweist, die ein weiteres optisch erkennbares Sicherheitsmerkmal bereitstellt.

22. Folie nach Anspruch 21,
**dadurch gekennzeichnet,**
**daß** die weitere optisch wirksame diffraktive Struktur die ersten und die zweiten Bereiche zumindest bereichsweise überlagert.

23. Folie nach einem der vorhergehenden Ansprüche,
**dadurch gekennzeichnet,**
**daß** die Folie ein Dünnfilmschichtsystem zur Erzeugung von Farbverschiebungen mittels Interferenz aufweist, das ein weiteres optisch erkennbares Sicherheitsmerkmal bereitstellt.

24. Folie nach Anspruch 23,
**dadurch gekennzeichnet,**
**daß** das Dünnfilmschichtsystem die ersten und zweiten Bereiche zumindest bereichsweise überlagert.

25. Folie nach einem der vorhergehenden Ansprüche,
**dadurch gekennzeichnet,**
**daß** die Folie (3, 4, 5, 8) eine reflektierende Schicht (34, 72, 85), insbesondere eine metallische Schicht oder eine HRI-Schicht aufweist.

26. Folie (5) nach Anspruch 25,
**dadurch gekennzeichnet,**
**daß** die reflektierende Schicht (72) von einer Schicht aus einem cholesterischen Flüssigkristall-Material gebildet wird, die einen blickwinkelabhängigen Farbverschiebungseffekt als weiteres optisch erkennbares Sicherheitsmerkmal generiert.

27. Folie (5) nach Anspruch 26,
**dadurch gekennzeichnet,**
**daß** die Folie (5) eine halbtransparente Schicht (71), insbesondere eine dünne Aluminiumschicht, aufweist, die zwischen der Schicht (72) aus einem cholesterischem Flüssigkristall-Material und der mindestens einen anisotropen Polymerschicht (32) angeordnet ist.

28. Folie nach einem der Ansprüche 25 bis 27,
**dadurch gekennzeichnet,**
**daß** die reflektierende Schicht partiell ausgebildet ist, wodurch ein weiteres optisch erkennbares Sicherheitsmerkmal bereit gestellt wird.

29. Folie (3, 4, 5, 8) nach einem der vorhergehenden Ansprüche,
**dadurch gekennzeichnet,**
**daß** die Folie ein optisches Sicherheitselement zur Sicherung von Banknoten, Kreditkarten, Pässen, und Identitätskarten ist.

30. Folie nach Anspruch 29,
**dadurch gekennzeichnet,**
**daß** die Folie in Form eines Sicherheitsfadens ausgeformt ist.

31. Folie nach einem der vorhergehenden Ansprüche,
**dadurch gekennzeichnet,**
**daß** das erste und/oder das zweite Sicherheitsmerkmal latente Sicherheitsmerkmale sind.

## Claims

1. Film (3, 4, 5, 8), in particular stamping film, laminating film or sticker film, wherein the film (3, 4, 5, 8) has at least one anisotropic polymer layer (32, 83, 84) made from an at least partially orientated liquid crystal material,
wherein the anisotropic polymer layer (32) or the anisotropic polymer layers (83, 84) made from an at least partially orientated liquid crystal material has or have one or more first regions (41, 43, 45, 48, 50, 54) forming a first security feature (21), in which first regions (41, 43, 45, 48, 50, 54) the anisotropic polymer layer (32, 83) has characteristics which are linearly polarising or rotate the polarisation direction and, on examination, can be visualised through a first polariser (61), and has or have one or more second regions (42, 44, 46, 47, 49, 51, 53) forming a second security feature (22),
**characterised in that**
the anisotropic polymer layer (32, 84) of the second security feature (22) has circularly polarising characteristics, wherein the second security feature, on examination, can be visualised through a second polariser (62) responding to another polarisation state.

2. Film according to claim 1,
**characterised in that**
one of the at least one anisotropic polymer layers (32) has both first regions (41, 43, 45, 48, 50, 54) having characteristics which are linearly polarising or rotate the polarisation direction and second regions (432, 44, 46, 47, 49, 51, 53) having circularly polarising characteristics, wherein preferably first regions and second regions of the anisotropic polymer layer (32) are arranged next to each other.

3. Film according to one of the preceding claims,
**characterised in that**
the film (3, 4, 5, 8) has at least one replication layer (33), to which the anisotropic polymer layer (32) made from a liquid crystal material is applied, and that a diffractive structure (36, 361, 364, 365) is introduced into the surface of the replication layer (33) facing the anisotropic polymer layer (32) made from a liquid crystal material for the orientation of the anisotropic polymer layer (32) made from a liquid crystal material.

4. Film according to claim 3,
**characterised in that**
one or more structural parameters of the diffractive structure (36, 361, 364, 365) differ in first regions and second regions, the corresponding first regions (41, 43, 45, 48, 50, 54) having characteristics which are linearly polarising or rotate the polarisation direction or second regions (42, 44, 46, 47, 49, 51, 53) having circularly polarising characteristics being assigned to the adjacent anisotropic polymer layer (32).

5. Film according to claim 4,
**characterised in that**
the average structure depth of the diffractive structure (36, 361, 364, 365) is different in the first regions and the second regions.

6. Film according to one of claims 3 to 5,
**characterised in that**
the diffractive structure (36, 361) is formed from an overlap of a first structure for the orientation of the liquid crystal material and a second structure for the adjustment of the linearly polarising characteristics, characteristics rotating the polarisation direction or circularly polarising characteristics of the anisotropic polymer layer (32) which abuts onto the replication layer (33).

7. Film according to claim 6,
**characterised in that**
the first structure is a line grid having a spatial frequency of 1,500 lines/mm to 3,500 lines/mm and a depth of 50 nm to 500 nm.

8. Film according to claim 7,
**characterised in that**
the line grid has a different azimuth orientation in certain regions.

9. Film according to one of claims 6 to 8,
**characterised in that**
the second structure consists of a structure, the average structure depth of which varies in first and second regions.

10. Film according to one of claims 6 to 9,
**characterised in that**
the second structure consists of a matt structure having a structure depth of 200 nm to 800nm, which is provided either in the first regions or in the second regions.

11. Film according to claim 10,
**characterised in that**
the matt structure is an isotropic matt structure having a lateral correlation length of 1 to 10µm.

12. Film (8) according to claim 1,
**characterised in that**
the film (8) has two or more anisotropic polymer layers (83, 84) made from an at least partially orientated liquid crystal material, wherein one of the anisotropic polymer layers (83) has regions (41, 43, 45, 48, 50) having characteristics which are linearly polarising or rotate the polarisation direction and a second of the anisotropic polymer layers has regions (42, 44, 46, 47, 49, 51) having circularly polarising characteristics.

13. Film according to one of the preceding claims,
**characterised in that**
the film (3, 5, 8) has a further anisotropic polymer layer (31, 82) which has at least partially circularly polarising characteristics, wherein regions of the further anisotropic polymer layer (31, 82) having circularly polarising characteristics are arranged above or below the first and second regions (41 to 54) of the at least one anisotropic polymer layer (32, 83, 84).

14. Film (3) according to one of the preceding claims,
**characterised in that**
the at least one anisotropic polymer layer (32) has a plurality of image regions (501 to 541) which have an extension of less than 40µm, wherein at least one of the first regions (53) having characteristics which are linearly polarising or rotate the polarisation direction and at least one of the two regions (54) having circularly polarising characteristics are arranged in each of the image regions (501 to 541).

15. Film according to one of the preceding claims,
**characterised in that**
the first security feature comprises an object, to which first regions having varying azimuth orientation are assigned for the generation of a grey-scale image.

16. Film according to one of the preceding claims,
**characterised in that**
the second security feature comprises an object, to which second regions having varying azimuth orientation are assigned for the generation of a grey-scale image.

17. Film according to one of the preceding claims,
**characterised in that**
the first security feature comprises two or more objects, to which first regions having characteristics which are variably linearly polarising or rotate the polarisation direction are assigned.

18. Film according to one of the preceding claims,
**characterised in that**
the second security feature comprises two or more objects, to which second regions having variably circularly polarising characteristics, in particular a left-handed or right-handed circular polarisation capability, are assigned.

19. Film (4) according to one of the preceding claims,
**characterised in that**
the first or second regions are arranged for the coding of a third security feature or a fourth security feature which is visible, on examination, through an assigned third or fourth polariser provided with an assigned decoding polarisation pattern.

20. Film (4) according to one of the preceding claims,
**characterised in that**
first and second regions (411, 421, 431, 441, 451, 461, 471, 481, 491, 551, 561) are arranged for the coding of a fifth security feature, which is visible, on examination, through a fifth polariser (63) provided with an assigned decoding polarisation pattern, said polariser (63) having regions (412, 432, 452, 482, 552) for the detection of linearly polarised light and regions (422, 441, 462, 472, 492, 562) for the detection of circularly polarised light.

21. Film according to one of the preceding claims,
**characterised in that**
the film has a further layer having a further optically active diffractive structure which provides a further optically recognisable security feature.

22. Film according to claim 21,
**characterised in that**
the further optically active diffractive structure overlaps the first and second regions at least in certain regions.

23. Film according to one of the preceding claims,
**characterised in that**
the film has a thin film layer system for the generation of colour shifts by means of interference which provides a further optically recognisable security feature.

24. Film according to claim 23,
**characterised in that**
the thin film layer system overlaps the first and second regions at least in certain regions.

25. Film according to one of the preceding claims,
**characterised in that**
the film (3, 4, 5, 8) has a reflective layer (34, 72, 85), in particular a metallic layer or an HRI layer.

26. Film (5) according to claim 25,
**characterised in that**
the reflective layer (72) is formed of a layer made from a cholesteric liquid crystal material which generates a colour shift effect depending on the viewing angle as a further optically recognisable security feature.

27. Film (5) according to claim 26,
**characterised in that**
the film (5) has a semitransparent layer (71), in particular a thin aluminium layer, which is arranged between the layer (72) made from a cholesteric liquid crystal material and the at least one anisotropic polymer layer (32).

28. Film according to one of claims 25 to 27,
**characterised in that**
the reflective layer is partially formed, whereby a further optically recognisable security feature is provided.

29. Film (3, 4, 5, 8) according to one of the preceding claims,
**characterised in that**
the film is an optical security element for the protection of bank notes, credit cards, passports and identity cards.

30. Film according to claim 29,
**characterised in that**
the film is shaped in the form of a security thread.

31. Film according to one of the preceding claims,
**characterised in that**
the first and/or the second security feature are latent security features.

## Revendications

1. Feuille (3, 4, 5, 8), en particulier feuille à estamper, feuille stratifiée ou feuille à coller, sachant que la feuille (3, 4, 5, 8) présente au moins une couche de polymère (32, 83, 84) anisotrope composée d'un matériau à cristaux liquides au moins partiellement orienté,
sachant que la couche de polymère (32) anisotrope ou les couches de polymère (83, 84) anisotropes composée/composées d'un matériau à cristaux liquides au moins partiellement orienté présente/présentent une ou plusieurs premières zones (41, 43, 45, 48, 50, 54) formant une première caractéristique de sécurité (21), dans lesquelles la couche de polymère (32, 83) anisotrope possède des propriétés de polarisation linéaire ou de rotation du sens de polarisation et qui peuvent être visualisées lors de l'observation à travers un premier polariseur (61) et présente/présentent une ou plusieurs deuxièmes zones (42, 44, 46, 47, 49, 51, 53) formant une deuxième caractéristique de sécurité (22),
**caractérisée en ce**
**que** la couche de polymère (32, 84) anisotrope de la deuxième caractéristique de sécurité (22) possède des propriétés de polarisation circulaire, sachant que la deuxième caractéristique de sécurité peut être visualisée lors de l'observation à travers un deuxième polariseur (62) répondant à un autre état de polarisation.

2. Feuille selon la revendication 1,
**caractérisée en ce**
**qu'**une des couches de polymère (32) anisotropes présente aussi bien des premières zones (41, 43, 45, 48, 50, 54) présentant des propriétés de polarisation linéaire ou de rotation du sens de polarisation que des deuxièmes zones (432, 44, 46, 47, 49, 51, 53) également présentant des propriétés de polarisation circulaire, sachant que de manière préférée des premières zones et des deuxièmes zones de la couche de polymère (32) anisotrope sont disposées les unes à côté des autres.

3. Feuille selon l'une quelconque des revendications précédentes,
**caractérisée en ce**
**que** la feuille (3, 4, 5, 8) présente au moins une couche de réplication (33), sur laquelle la couche de polymère (32) anisotrope composée d'un matériau à cristaux liquides est appliquée, et en ce qu'une structure diffractive (36, 361, 364, 365) servant à orienter la couche de polymère (32) anisotrope composée d'un matériau à cristaux liquides est intégrée dans la surface, tournée vers la couche de polymère (32) anisotrope composée d'un matériau à cristaux liquides, de la couche de réplication (33).

4. Feuille selon la revendication 3,
**caractérisée en ce**
**qu'**un paramètre de structure ou plusieurs paramètres de structure de la structure diffractive (36, 361, 364, 365) dans des premières zones et dans des deuxièmes zones sont différents, lesquels sont associés à des premières zones (41, 43, 45, 48, 50, 54) correspondantes présentant des propriétés de polarisation linéaire ou de rotation du sens de polarisation ou à des deuxièmes zones (42, 44, 46, 47, 49, 51, 53) présentant des propriétés de polarisation circulaire de la couche de polymère (32) anisotrope adjacente.

5. Feuille selon la revendication 4,
**caractérisée en ce**
**que** la profondeur de structure moyenne de la structure diffractive (36, 361, 364, 365) est différente dans les premières zones et dans les deuxièmes zones.

6. Feuille selon l'une quelconque des revendications 3 à 5,
**caractérisée en ce**
**que** la structure diffractive (36, 361) est formée à partir d'une superposition d'une première structure servant à orienter le matériau à cristaux liquides et d'une deuxième structure servant à régler les propriétés de polarisation linéaire, les propriétés de rotation du sens de polarisation ou les propriétés de polarisation circulaire de la couche de polymère (32) anisotrope adjacente à la couche de réplication (33).

7. Feuille selon la revendication 6,
**caractérisée en ce**
**que** la première structure est une trame linéaire présentant une fréquence spatiale allant de 1 500 lignes/mm à 3 500 lignes/mm et une profondeur allant de 50 nm à 500 nm.

8. Feuille selon la revendication 7,
**caractérisée en ce**
**que** la trame linéaire présente par endroits une orientation azimutale différente.

9. Feuille selon l'une quelconque des revendications 6 à 8,
**caractérisée en ce**
**que** la deuxième structure est constituée d'une structure, dont la profondeur de structure moyenne est différente dans des premières zones et dans des deuxièmes zones.

10. Feuille selon l'une quelconque des revendications 6 à 9,
**caractérisée en ce**
**que** la deuxième structure est constituée d'une structure matte présentant une profondeur de structure allant de 200 nm à 800 nm, qui est prévue soit dans les premières zones soit dans les deuxièmes zones.

11. Feuille selon la revendication 10,
**caractérisée en ce**
**que** la structure matte est une structure matte isotrope présentant une longueur de corrélation latérale allant de 1 à 10 µm.

12. Feuille (8) selon la revendication 1,
**caractérisée en ce**
**que** la feuille (8) présente deux ou plusieurs couches de polymère (83, 84) anisotropes composées d'un matériau à cristaux liquides au moins partiellement orienté, sachant qu'une des couches de polymère (83) anisotropes présente des zones (41, 43, 45, 48, 50) présentant des propriétés de polarisation linéaire ou de rotation du sens de polarisation et qu'une deuxième des couches de polymère anisotropes présente des zones (42, 44, 46, 47, 49, 51) présentant des propriétés de polarisation circulaire.

13. Feuille selon l'une quelconque des revendications précédentes,
**caractérisée en ce**
**que** la feuille (3, 5, 8) présente une couche de polymère (31, 82) anisotrope supplémentaire, qui possède au moins des propriétés partielles de polarisation circulaire, sachant que des zones de la couche de polymère (31, 82) anisotrope supplémentaire présentant des propriétés de polarisation circulaire sont disposées au-dessus ou en dessous des premières zones et des deuxièmes zones (41 à 54) de la couche de polymère (32, 83, 84) anisotrope au moins au nombre de une.

14. Feuille (3) selon l'une quelconque des revendications précédentes,
**caractérisée en ce**
**que** la couche de polymère (32) anisotrope au moins au nombre de une présente une pluralité de zones d'image (501 à 541), qui possèdent une extension inférieure à 40 µm, sachant qu'au moins une des premières zones (53) présentant des propriétés de polarisation linéaire ou de rotation du sens de polarisation et au moins une des deuxièmes zones (54) présentant des propriétés de polarisation circulaire sont disposées dans chacune des zones d'image (501 à 541).

15. Feuille selon l'une quelconque des revendications précédentes,
**caractérisée en ce**
**que** la première caractéristique de sécurité comprend un objet, auquel des premières zones présentant une orientation azimutale variable servant à générer une image en niveau de gris sont associées.

16. Feuille selon l'une quelconque des revendications précédentes,
**caractérisée en ce**
**que** la deuxième caractéristique de sécurité comprend un objet, auquel des deuxièmes zones présentant une variation azimutale variable servant à générer une image à niveau de gris sont associées.

17. Feuille selon l'une quelconque des revendications précédentes,
**caractérisée en ce**
**que** la première caractéristique de sécurité comprend deux ou plusieurs objets, auxquels des premières zones présentant différentes propriétés de polarisation linéaire ou de rotation du sens de polarisation sont associées.

18. Feuille selon l'une quelconque des revendications précédentes,
**caractérisée en ce**
**que** la deuxième caractéristique de sécurité comprend deux ou plusieurs objets, auxquels des deuxièmes zones présentant différentes propriétés de polarisation circulaire, notamment une aptitude de polarisation circulaire côté gauche ou côté droit, sont associées.

19. Feuille (4) selon l'une quelconque des revendications précédentes,
**caractérisée en ce**
**que** des premières ou des deuxièmes zones sont disposées aux fins du codage d'une troisième caractéristique de sécurité ou d'une quatrième caractéristique de sécurité, laquelle est visible lors de l'observation à travers un troisième ou quatrième polariseur associé pourvu d'un modèle de polarisation associé de décodage.

20. Feuille (4) selon l'une quelconque des revendications précédentes,
**caractérisée en ce**
**que** des premières et des deuxièmes zones (411, 421, 431, 441, 451, 461, 471, 481, 491, 551, 561) sont disposées aux fins du codage d'une cinquième caractéristique de sécurité, laquelle est visible lors de l'observation à travers un cinquième polariseur (63) pourvu d'un modèle de polarisation associé de décodage, lequel polariseur présente des zones (412, 432, 452, 482, 552) servant à détecter une lumière polarisée de manière linéaire et des zones (422, 441, 462, 472, 492, 562) servant à détecter une lumière polarisée de manière circulaire.

21. Feuille selon l'une quelconque des revendications précédentes,
**caractérisée en ce**
**que** la feuille présente une couche supplémentaire présentant une structure diffractive active optiquement, laquelle fournit une caractéristique de sécurité supplémentaire pouvant être identifiée optiquement.

22. Feuille selon la revendication 21,
**caractérisée en ce**
**que** la structure diffractive supplémentaire active optiquement recouvre au moins par endroits les premières et les deuxièmes zones.

23. Feuille selon l'une quelconque des revendications précédentes,
**caractérisée en ce**
**que** la feuille présente un système de couches à feuille fine servant à produire des décalages de couleur au moyen d'une interférence, lequel propose une caractéristique de sécurité supplémentaire pouvant être identifiée optiquement.

24. Feuille selon la revendication 23,
**caractérisée en ce**
**que** le système de couches à feuille fine recouvre au moins par endroits les premières et les deuxièmes zones.

25. Feuille selon l'une quelconque des revendications précédentes,
**caractérisée en ce**
**que** la feuille (3, 4, 5, 8) présente une couche (34, 72, 85) réfléchissante, en particulier une couche métallique ou une couche à indice de réfraction élevé.

26. Feuille (5) selon la revendication 25,
**caractérisée en ce**
**que** la couche (27) réfléchissante est formée par une couche composée d'un matériau à cristaux liquides cholestérique, laquelle génère un effet de décalage de couleur dépendant de l'angle d'observation comme caractéristique de sécurité supplémentaire pouvant être identifiée optiquement.

27. Feuille (5) selon la revendication 26,
**caractérisée en ce**
**que** la feuille (5) présente une couche semi-transparente (71), en particulier une couche en aluminium fine, qui est disposée entre la couche (72) composée d'un matériau à cristaux liquides cholestérique et la couche de polymère (32) anisotrope au moins au nombre de une.

28. Feuille selon l'une quelconque des revendications 25 à 27,
**caractérisée en ce**
**que** la couche réfléchissante est réalisée de manière partielle, ce qui permet de fournir une caractéristique de sécurité supplémentaire pouvant être identifiée optiquement.

29. Feuille (3, 4, 5, 8) selon l'une quelconque des revendications précédentes,
**caractérisée en ce**
**que** la feuille est un élément de sécurité optique servant à sécuriser des billets de banque, des cartes de crédit, des passeports et des cartes d'identité.

30. Feuille selon la revendication 29,
**caractérisée en ce**
**que** la feuille est formée sous la forme d'un fil de sécurité.

31. Feuille selon l'une quelconque des revendications précédentes,
**caractérisée en ce**
**que** la première et/ou la deuxième caractéristique de sécurité sont des caractéristiques de sécurité latentes.
